# FASCICULE DE BREVET EUROPEEN

(11) **EP 1 699 024 B1**
(45) Date de publication et mention de la délivrance du brevet: **09.03.2011**
(21) Numéro de dépôt: 06100215.0
(22) Date de dépôt: 10.01.2006
(51) Int. Cl.: G07F 17/16, G06F 1/00, H04L 29/06, G06F 21/00

(54) **Procédé de diffusion de contenu numérique via un réseau de téléphonie mobile**
Verfahren zur Verteilung digitaler Inhalte über ein Mobiltelefonnetz
Method for transmission of digital content via a mobile telephone network

(30) Priorité: 12.01.2005 FR 0500290
(43) Date de publication de la demande: 06.09.2006
(73) Titulaire: Bouygues Telecom, 92100 Boulogne Billancourt (FR)
(72) Inventeur: Nicolas, Cédric, 75016, PARIS (FR); Smierzchalski, Stephane, 75016 Paris (FR)
(74) Mandataire: Callon de Lamarck, Jean-Robert

(56) Documents cités:
- WO-A-03/034653
- WO-A-03/040898
- WO-A-2004/055705
- US-A1- 2005 004 875
- CARVALHO N ET AL: "PAMM Platform: A DRM Solution for MMS Content" 24 juin 2003 (2003-06-24), INTERNATIONAL CONFERENCE ON MOBILE BUSINESS, PAGE(S) 1-14 , XP002314271 * le document en entier *
- OPEN MOBILE ALLIANCE: "Digital Rights Management"[Online] 15 juin 2004 (2004-06-15), pages 1-20, XP002346775 Extrait de l'Internet: URL:www.openmobilealliance.org> [extrait le 2005-09-26]

## Description

L'invention concerne le domaine de la téléphonie mobile.

Elle concerne plus particulièrement les échanges de contenus numériques (images, sonneries, animations, programmes, documents, etc.) via un réseau de téléphonie mobile cellulaire

Aujourd'hui, la super-distribution permet la diffusion de contenus d'un utilisateur à un autre via une transmission entre deux terminaux (téléphones mobiles cellulaires ou PDA communicants) reliés à un réseau de téléphonie mobile.

La gestion des droits numériques (ou DRM pour Digital Right Management) est par conséquent devenue une préoccupation pour les éditeurs de contenus qui souhaitent préserver les droits d'exploitation associés à ces contenus.

Dans ces conditions, les éditeurs de contenu ont été amenés à établir des normes en vue de contrôler les transferts de contenus entre utilisateurs.

Par exemple, la norme OMA DRM 1.0 publiée par l'OMA (Open Mobile Alliance) définit des techniques de protection de contenu. Selon ces techniques, les contenus numériques diffusés par les éditeurs de contenus peuvent être marqués avec différents niveaux de marquage prédéfinis reconnaissables par certains téléphones mobiles.

La technique « forward-lock » consiste à marquer un contenu comme non-transférable. Un contenu ainsi marqué ne peut être transféré par un utilisateur vers un autre utilisateur.

La technique « combined delivery » est similaire au « forward lock », excepté qu'elle associe en outre au contenu des règles d'utilisation.

La technique « separate delivery » consiste à transmettre de manière séparée un contenu sous la forme de fichiers encryptés et des droits d'utilisation associés. Un utilisateur peut transférer le contenu vers un autre utilisateur, sous réserve de l'acquisition au préalable d'une autorisation auprès de l'éditeur de contenu.

Le document US2005/004875 décrit un mode de DRM où le contenu comprend une adresse URL du serveur du contenu. Si le contenu est marqué non-transférable la technique de «Link forwarding» permet à l'utilisateur de transmettre cet URL vers un autre utilisateur afin que celui-ci puisse télécharger le contenu du serveur après l'avoir payé.

Un but de l'invention est de proposer un procédé permettant à un utilisateur d'un terminal mobile de transférer un contenu numérique à un autre utilisateur sous le contrôle des éditeurs de contenu.

L'invention est définie dans la revendication indépendante. Des modes particuliers de réalisation sont compris dans les revendications dépendantes.

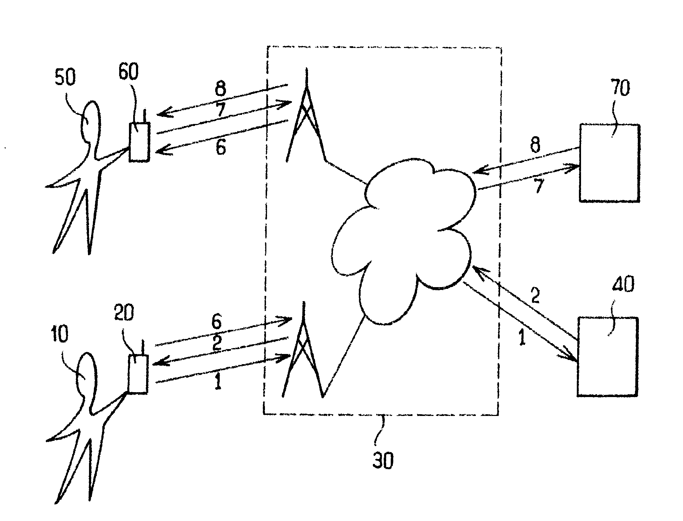

D'autres caractéristiques et avantages ressortiront encore de la description qui suit, laquelle est purement illustrative et non limitative et doit être lue en regard de la figure unique annexée qui représente de manière schématique les différentes étapes d'un procédé de diffusion de contenu conforme à un mode de réalisation possible de la présente invention.

Le procédé de diffusion proposé comprend un procédé de téléchargement de contenu et un procédé de transfert de contenu correspondant.

Le procédé de téléchargement de contenu comprend les étapes suivantes.

Selon une première étape, un premier utilisateur 10 d'un premier téléphone mobile 20 se connecte via le réseau de téléphonie mobile 30 à un serveur 40. Le serveur 40 est un serveur de téléchargement de contenus numériques géré par un éditeur de contenus. Les contenus proposés par l'éditeur peuvent par exemple comprendre des fichiers vidéo ou musicaux.

Le premier téléphone mobile 20 transmet au serveur 40 une requête de téléchargement d'un contenu choisi par l'utilisateur 10 (flèche 1).

Selon une deuxième étape, le serveur 40 traite la requête qu'il reçoit et transmet en retour au téléphone mobile 20 un fichier comprenant le contenu et des données de marquage associées (flèche 2) via le réseau de téléphonie mobile 30.

Lors de cette deuxième étape, le serveur 40 associe au contenu des données de marquage. A cet effet, le serveur 40 comprend des moyens pour insérer dans un en-tête du fichier comprenant le contenu des données de marquage. Ces données de marquage incluent des informations reconnaissables par le téléphone mobile 20 indiquant que le contenu ne peut être transféré qu'au moyen d'un lien de substitution ainsi qu'un lien de substitution. Le lien de substitution contient une adresse URL (Universal Resource Locator).

Selon une troisième étape, le téléphone mobile 20 enregistre le fichier dans sa mémoire vive.

On suppose maintenant que le premier utilisateur 10 souhaite transférer le contenu numérique qu'il vient de télécharger vers un deuxième utilisateur 50. Le deuxième utilisateur 50 est muni d'un deuxième téléphone mobile 60.

Le procédé de transfert de contenu comprend les étapes suivantes.

Selon une quatrième étape, le premier utilisateur 10 commande le premier téléphone mobile 20 pour transférer le contenu vers le deuxième téléphone mobile 60. A cet effet, le premier utilisateur 10 compose par exemple un message MMS ou un email à l'attention du deuxième utilisateur 50 et effectue les opérations nécessaires pour attacher au message le contenu qu'il souhaite transférer.

Lorsque le premier utilisateur 10 commande le transfert du contenu depuis le premier téléphone mobile 20 vers le deuxième téléphone mobile 60, le premier téléphone mobile 20 reconnaît les données de marquage associées au contenu.

Le premier terminal mobile 20 est en effet programmé pour lire l'en-tête du fichier comprenant le contenu et identifier les données de marquage.

Selon une cinquième étape, le premier téléphone mobile 20 affiche un message d'avertissement indiquant à l'utilisateur 20 que le contenu ne peut être transféré. Le premier téléphone mobile 20 affiche également un message proposant au premier utilisateur 10 de transférer le lien associé au contenu.

Le premier utilisateur 10 peut valider ou refuser la proposition.

Selon une sixième étape, si le premier utilisateur 10 valide la proposition, le premier téléphone mobile 20 transfère au deuxième téléphone mobile 60 le message composé par le premier utilisateur 10 contenant le lien associé au contenu (flèche 6) via le réseau de téléphonie mobile 30.

Le deuxième utilisateur 50 peut sélectionner le lien qu'il reçoit.

Selon une première possibilité, le lien contient une adresse URL qui désigne l'emplacement du contenu dans le serveur 40. Dans ce cas, lorsque le deuxième utilisateur 50 sélectionne le lien, le deuxième téléphone mobile 60 transmet au serveur 40 une requête de téléchargement du contenu. Le deuxième utilisateur 50 peut ainsi obtenir le contenu via le lien qu'il a reçu de l'utilisateur 10, sous le contrôle de l'éditeur de contenu.

Selon une deuxième possibilité, le lien contient une adresse URL d'une page située dans un autre serveur 70. Cette possibilité permet de ne pas révéler au deuxième utilisateur 50 l'emplacement du contenu numérique dans le serveur 40.

Dans ce cas, lorsque le deuxième utilisateur 50 sélectionne le lien, le deuxième terminal 60 se connecte au serveur 70 (flèche 7).

Le serveur 70 peut proposer au deuxième utilisateur 50 de souscrire à un service de téléchargement de contenu. Si le deuxième utilisateur 60 accepte de souscrire au service de téléchargement, il pourra être connecté au serveur 40 de téléchargement de contenu pour télécharger le contenu souhaité.

Le serveur 70 peut également transmettre au deuxième téléphone mobile 60 un contenu sous forme dégradé. Le contenu sous forme dégradé peut être constitué par exemple par un extrait du contenu numérique ou du contenu numérique avec une qualité dégradé par rapport au contenu numérique originel. Le contenu sous forme dégradée permet à l'utilisateur 50 de prendre connaissance du contenu et de décider s'il souhaite le télécharger.

## Revendications

1. Procédé de diffusion de contenu numérique ayant un emplacement dans un premier serveur (40), le contenu numérique étant associé à des données de marquage incluant un lien contenant une adresse URL d'une page située dans un deuxième serveur (70), comprenant des étapes selon lesquelles:
- lorsq'un utilisateur (10) commande le transfert du contenu depuis un premier terminal mobile (20) vers un deuxième terminal (60), le premier terminal mobile (20) reconnaît les données de marquage associées au contenu,
- le premier terminal mobile (20) transfère uniquement le lien associé au contenu vers le deuxième terminal (60),
dans lequel lorsqu'un utilisateur (50) du deuxième terminal (60) active le lien, le deuxième terminal (60) se connecte au deuxième serveur (70).

2. Procédé selon l'une des revendications qui précèdent, dans lequel les données de marquage sont inscrites dans un en-tête d'un fichier comprenant le contenu numérique.

3. Procédé selon l'une des revendications 1 ou 2, dans lequel losqu'un utilisateur (50) du deuxième terminal (60) active le lien, le deuxième terminal (60) se connecte à une page de souscription à un service de téléchargement de contenu.

4. Procédé selon l'une des revendications 1 ou 2, dans lequel lorsqu'un utilisateur (50) du deuxième terminal (60) active le lien, le lien déclenche le téléchargement d'un contenu sous forme dégradée.

5. Procédé selon l'une des revendications qui précèdent, incluant le téléchargement préalable du contenu numérique vers le premier terminal mobile (20) via un réseau de téléphonie mobile (30), comprenant l'étape consistant à transmettre au premier terminal mobile le contenu numérique ainsi que les données de marquage associées au contenu numérique.

## Claims

1. A method of distributing a digital content located on a first server (40), the digital content being associated with marking data including a link containing an URL adress of a page located on a second server (70), comprising steps wherein:
- when a user (10) orders the transfer of the content from a first mobile terminal (20) to a second terminal (60), the first mobile terminal (20) recognizes the marking data associated with the content.
- the first mobile terminal (20) transfers only the link associated with the content to the second terminal (60)
wherein, when a user (50) of the second terminal (60) activates the link, the second terminal (60) connects to the second server (70).

2. The method according to one of the preceding claims, wherein the marking data are written in a header of a file containing the digital content.

3. The method according to Claim 1 or 2, wherein, when a user (50) of the second terminal (60) activates the link, the second terminal (60) connects to a subscription page at a content downloading service.

4. The method according to Claim 1 or 2, wherein, when a user (50) of the second terminal (60) activates the link, the link triggers the downloading of content in degraded form.

5. The method according to one of the preceding claims, including the prior uploading of the digital content to the first mobile terminal (20) via a mobile telephone network (30), including the step consisting of transmitting to the first mobile terminal the digital content along with the marking data associated with the digital content.

## Patentansprüche

1. Verfahren zur Verteilung eines digitalen Inhalts, der einen Speicherort in einem ersten Server (40) hat, wobei der digitale Inhalt mit Markierungsdaten verknüpft ist, die einen Link aufweisen, der eine URL-Adresse einer in einem zweiten Server (70) angeordneten Seite enthält, aufweisend die folgenden Schritte:
- wenn ein Benutzer (10) die Übertragung des Inhalts von einem ersten mobilen Endgerät (20) zu einem zweiten Endgerät (60) befiehlt, erkennt das erste mobile Endgerät (20) die mit dem Inhalt verknüpften Markierungsdaten,
- das erste mobile Endgerät (20) überträgt nur den mit dem Inhalt verknüpften Link zu dem zweiten Endgerät (60),
wobei sich das zweite Endgerät (60) mit dem zweiten Server (70) verbindet, wenn ein Benutzer (50) des zweiten Endgeräts (60) den Link aktiviert.

2. Verfahren nach einem der vorstehenden Ansprüche, in welchem die Markierungsdaten in einem Kopf einer den digitalen Inhalt enthaltenden Datei eingetragen sind.

3. Verfahren nach einem der Ansprüche 1 oder 2, in welchem sich das zweite Endgerät (60) mit einer Bestellseite eines Dienstes zum Herunterladen von Inhalt verbindet, wenn ein Benutzer (50) des zweiten Endgeräts (60) den Link aktiviert.

4. Verfahren nach einem der Ansprüche 1 oder 2, in welchem der Link das Herunterladen eines Inhalts in verminderter Form auslöst, wenn ein Benutzer (50) des zweiten Endgeräts (60) den Link aktiviert.

5. Verfahren nach einem der vorstehenden Ansprüche, darin eingeschlossen das vorherige Herunterladen des digitalen Inhalts zu dem ersten mobilen Endgerät (20) über ein Mobilfunknetz (30), aufweisend den Schritt, der darin besteht, zu dem ersten mobilen Endgerät den digitalen Inhalt sowie die mit dem digitalen Inhalt verknüpften Markierungsdaten zu übertragen.
